# EUROPEAN PATENT APPLICATION

(11) **EP 4 704 310 A1**
(43) Date of publication of application: **04.03.2026**
(21) Application number: 23945732.8
(22) Date of filing: 26.12.2023
(51) Int. Cl.: H02K 1/276, H02K 1/278, H02K 15/03

(54) **ROTOR STRUCTURE AND ELECTRIC MOTOR**

(30) Priority: 19.07.2023 CN 202310894327
(71) Applicant: Gree Electric Appliances, Inc. of Zhuhai, Zhuhai, Guangdong 519070 (CN); Zhuhai Kaibang Motor Manufacture Co., Ltd., Zhuhai, Guangdong 519110 (CN)
(72) Inventor: CHEN, Bin, Zhuhai, Guangdong 519070 (CN); XIAO, Yong, Zhuhai, Guangdong 519070 (CN); LI, Xia, Zhuhai, Guangdong 519070 (CN); SHI, Jinfei, Zhuhai, Guangdong 519070 (CN); WANG, Qingkai, Zhuhai, Guangdong 519070 (CN); HAN, Xueqiu, Zhuhai, Guangdong 519070 (CN)
(74) Representative: Zacco GmbH
(86) International application number: PCT/CN2023/142120
(87) International publication number: WO 2025/015854

(57) **Abstract**

Provided are a rotor structure and a motor. The rotor structure includes a rotor core (11), first permanent magnets (12), and a second permanent magnet (21), wherein the rotor core (11) is provided with mounting grooves, and the first permanent magnets (12) are mounted in the mounting grooves respectively; along an axial direction of the rotor core (11), an axial height of the first permanent magnets (12) is greater than an axial height of the rotor core (11); the second permanent magnet (21) is disposed at an axial end of the rotor core (11), the second permanent magnet (21) is of an integrated structure, through slots (22) are disposed on the second permanent magnet (21), and at least one end of each of the first permanent magnets (12) extends out of the rotor core (11) in an axial direction and is inserted into a corresponding through slot (22); the second permanent magnet (21) further includes an annular portion (23) and magnetic pole portions (24), wherein the magnetic pole portions (24) are integrally formed by a connection of the annular portion (23). According to the rotor structure of the present application, the magnetizing effect of a motor can be effectively improved, and the comprehensive utilization rate of a permanent magnet is improved.

## Description

### Cross-Reference to Related Application

This application claims priority to Chinese Patent Application No. 202310894327.7, filed on July 19, 2023 and entitled "Rotor Structure and Motor".

### Technical Field

The invention relates to the technical field of electric motor technologies, and in particular, to a rotor structure and a motor.

### Background

With the improvement of the energy efficiency standard of a motor, higher requirements have been put forward for the energy efficiency level of the motor. For a permanent magnet motor, it is necessary to further improve the high efficiency and high torque density of the motor.

At present, among technical means to improve the motor efficiency and the torque density, one technical means is to embed permanent magnets to obtain a larger air gap flux density and a larger magnetic flux. However, due to a fixed magnetic circuit structure of a rotor, the improvement in energy efficiency is limited. Another means is to use a rotor structure to increase the salient pole ratio of the motor and increase the reluctance torque of the motor to compensate for the defect of the permanent magnet torque, and the efficiency can be equivalent to that of the permanent magnet motor. However, usually, a larger rotor volume is required, so that the torque density of the motor is inferior to that of the permanent magnet motor.

Therefore, for a current motor, how to further achieve high efficiency and high torque density of the motor is an urgent problem to be solved.

### Summary

Disclosed are a rotor structure and a motor, which is able to effectively improve the magnetizing effect of the motor and improve the comprehensive utilization rate of a permanent magnet.

To achieve the above objectives, according to one aspect of the present invention, provided is a rotor structure, including a rotor core, first permanent magnets, and a second permanent magnet, wherein the rotor core is provided with mounting grooves, and the first permanent magnets are mounted in the mounting grooves; along an axial direction of the rotor core, an axial height of the first permanent magnets is greater than an axial height of the rotor core; the second permanent magnet is disposed at an axial end of the rotor core, the second permanent magnet is of an integrated structure, through slots are disposed on the second permanent magnet, and at least one end of the first permanent magnets extends out of the rotor core in an axial direction and is inserted into the through slots; the second permanent magnet further comprises an annular portion and magnetic pole portions, wherein the magnetic pole portions are integrally formed by the connection of the annular portion.

In some embodiments, the annular portion is located on a radial inner side of the second permanent magnet, the through slots are formed between each of two adjacent magnetic pole portions, the magnetic pole portions are radially arranged along a circumferential direction of the annular portion, and are connected to the annular portion through connecting ribs, so as to form an integral structure with the annular portion.

In some embodiments, the rotor structure comprises through holes, the through holes are disposed at a radial inner side of the first permanent magnets and penetrate through the rotor core and the second permanent magnet.

In some embodiments, the first permanent magnet is tangentially magnetized, and the second permanent magnet is axially magnetized.

In some embodiments, the second permanent magnet is injection-molded magnetic steel.

In some embodiments, at least one end of the axial end of the rotor core is provided with the second permanent magnet.

In some embodiments, through holes are formed between the through slots and the first permanent magnets located in the through slots.

In some embodiments, the first permanent magnets and the second permanent magnet are both magnetic flux sources, and no other magnetic conduction components are arranged in the rotor structure except for the rotor core.

In some embodiments, an axial height of the rotor core is x, an axial height of the first permanent magnets is y, y > x, and an axial height of the second permanent magnet is z, wherein 0.2×(y-x) ≤ z ≤ 1.2×(y-x) .

In some embodiments, z ≤ 0.5×(y-x) .

In some embodiments, on the plane perpendicular to the axial direction of the rotor core, an inner diameter of the second permanent magnet is Di2, and an inner diameter of the rotor core is Di1, wherein Di2≥Di1..

In some embodiments, an outer circumferential side of the rotor core is provided with limiting protrusions, and the limiting protrusions extend laterally from both sides of the rotor core in a circumferential direction and form a radial limit on the first permanent magnets.

In some embodiments, an outer peripheral wall of the rotor core comprises a plurality of arc surfaces disposed at intervals, and along a circumferential direction, a distance between the arc surfaces and a central axis of the rotor core gradually decreases from a middle of each of the arc surfaces to two ends of each of the arc surfaces.

In some embodiments, on a plane perpendicular to the axial direction of the rotor core, a maximum value of an outer diameter of the second permanent magnet is Do2, and a maximum value of an outer diameter of the rotor core is Do1, Do2 ≤ Do1.

In some embodiments, Do2 = Do1.

In some embodiments, a polar region of the magnetic pole portions is provided corresponding to a polar region of the rotor core.

In some embodiments, a region shape of the polar region of the magnetic pole portions is adapted to a region shape of a corresponding polar region of the rotor core, and the polar region of the magnetic pole portions is filled with the corresponding polar region of the rotor core.

In some embodiments, the second permanent magnet is injection-molded ferrite or injection-molded NdFeB.

In some embodiments, the second permanent magnet is alternately magnetized at NS poles along the axial direction of the rotor core.

In some embodiments, the polarity of a polar region of the second permanent magnet on a side close to the rotor core is a first polarity, and the polarities of two first permanent magnets on two adjacent sides of the polar region of the second permanent magnet on the side close to the rotor core are first polarities.

In some embodiments, the first permanent magnets are a sintered permanent magnet or an injection-molded permanent magnet.

In some embodiments, the rotor core is formed by stacking silicon steel sheets, or the rotor core is injection-molded magnetic steel; and on the plane perpendicular to the axial direction of the rotor core, along a radial direction, the rotor core is alternately magnetized at NS poles.

In some embodiments, the rotor structure is filled with plastic sealing materials at ends and internal gaps and sealed into a whole.

According to another aspect of the present invention, there is provided a motor, including a stator structure and a rotor structure, wherein the rotor structure is the described rotor structure.

Applying the technical solution of the present invention, a rotor structure, including a rotor core, a first permanent magnet and a second permanent magnet, wherein the rotor core has a mounting groove, the first permanent magnet is mounted in the mounting groove, along the axial direction of the rotor core, and the axial height of the first permanent magnet is greater than the axial height of the rotor core; the second permanent magnet is arranged at an axial end of the rotor core; the second permanent magnet is of an integrated structure; a through slot is arranged on the second permanent magnet; and at least one end of the first permanent magnet extends out of the rotor core in an axial direction and is inserted into the through slot. The second permanent magnet further includes an annular portion and a magnetic pole portion, and the magnetic pole portion is connected to form a whole via the annular portion.

The first permanent magnets and the second permanent magnet are both arranged in a rotor, and the first permanent magnets and the second permanent magnet together provide flux linkage to the motor, increasing a torque density of the motor; the relative position design of the first permanent magnets and the second permanent magnet can enable the first permanent magnets to serve as a part of a magnetic circuit through which magnetic flux lines of the second permanent magnet flow, and the magnetic flux lines of the first permanent magnets and the second permanent magnet are gathered on the rotor core and then enter an air gap and a stator, thereby improving the flux-concentration effect of a motor, effectively improving the efficiency and torque density of the motor, and increasing the output force of the motor; the first permanent magnets not only serve as a magnetic flux source, but also can draw magnetic flux lines of the second permanent magnet to enter the rotor core, meanwhile, the second permanent magnet not only serves as a magnetic flux source, but also can block leakage flux of the first permanent magnets, so that the comprehensive utilization rate of the permanent magnet is higher.

### Brief Description of the Drawings

The accompanying drawings, which form a part of the present invention, are used for providing a further understanding of the present invention. The schematic embodiments and illustrations of the present invention are used for explaining the present invention, and do not form improper limits to the present invention. In the drawings:
Fig. 1 shows a three-dimensional structural view of a rotor structure according to an embodiment of the present invention;
Fig. 2 shows an exploded structural view of a rotor structure of an embodiment of the present invention;
Fig. 3 shows a side view of a rotor structure of an embodiment of the present invention;
Fig. 4 shows a three-dimensional structural view of a second permanent magnet according to an embodiment of the present invention;
Fig. 5 shows a schematic top view of a second permanent magnet according to an embodiment of the present invention;
Fig. 6 shows a cross-sectional view taken along a line A-A of Fig. 5;
Fig. 7 shows a cross-sectional view taken along a line B-B direction of Fig. 5;
Fig. 8 shows a top view of a rotor structure of an embodiment of the present invention;
Fig. 9 shows a top view of a rotor structure of an embodiment of the present invention;
Fig. 10 shows a top view of a rotor structure of an embodiment of the present invention;
Fig. 11 shows a magnetic circuit principle diagram of a rotor structure according to an embodiment of the present invention;
Fig. 12 shows a comparison diagram of a flux-concentration coefficient between a motor of an embodiment of the present invention and a motor in the related art;
Fig. 13 shows a comparison diagram of comprehensive utilization rates of a permanent magnet of a motor of an embodiment of the present invention and a permanent magnet of a motor in the related art;
Fig. 14 shows a comparison diagram of an idle flux linkage of a motor of an embodiment of the present invention and a motor in the related art;
Fig. 15 shows a comparison diagram of an air gap magnetic density between a motor of an embodiment of the present invention and a motor in the related art; and
Fig. 16 shows a torque-current characteristic comparison diagram of a motor of an embodiment of the present invention and a motor in the related art.

The figures include the following reference signs:
11, rotor core; 111, limiting protrusion; 12, first permanent magnet; 21, second permanent magnet; 22, through slot; 23, annular portion; 24, magnetic pole portion; 31, through hole.

### Detailed Description of the Embodiments

It is important to note that the embodiments of the present disclosure and the characteristics in the embodiments can be combined under the condition of no conflicts. The present disclosure will be described below with reference to the drawings and embodiments in detail.

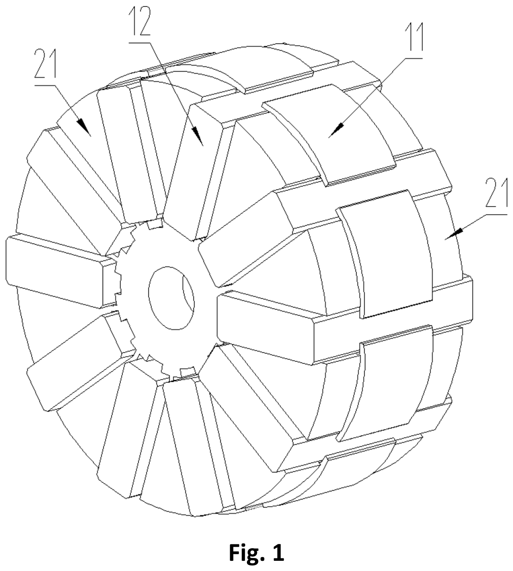

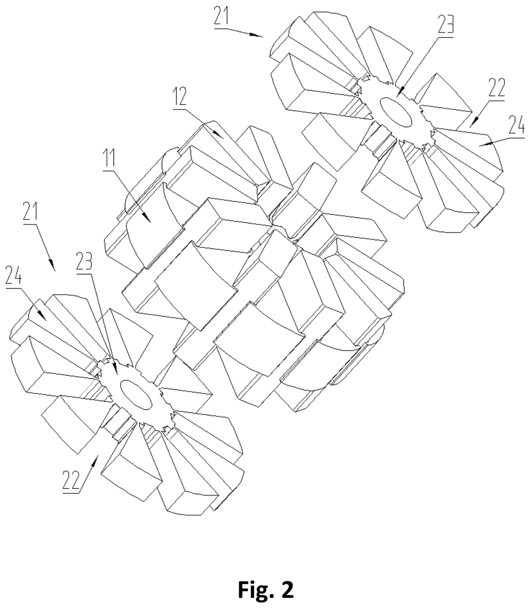

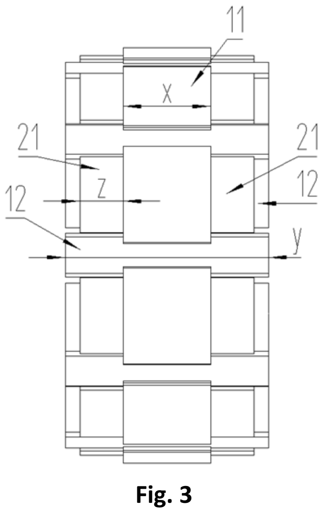

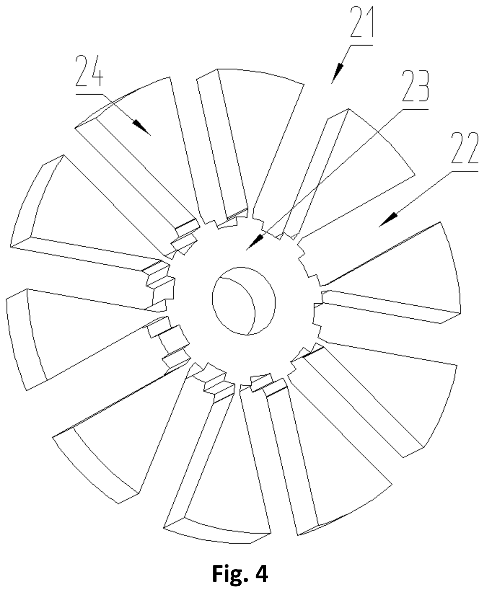

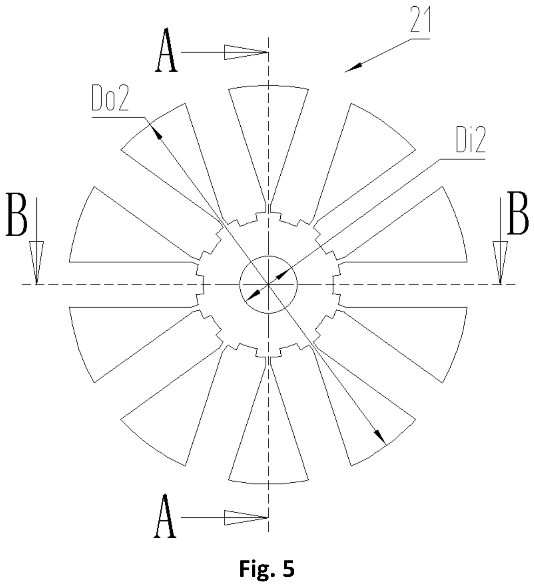

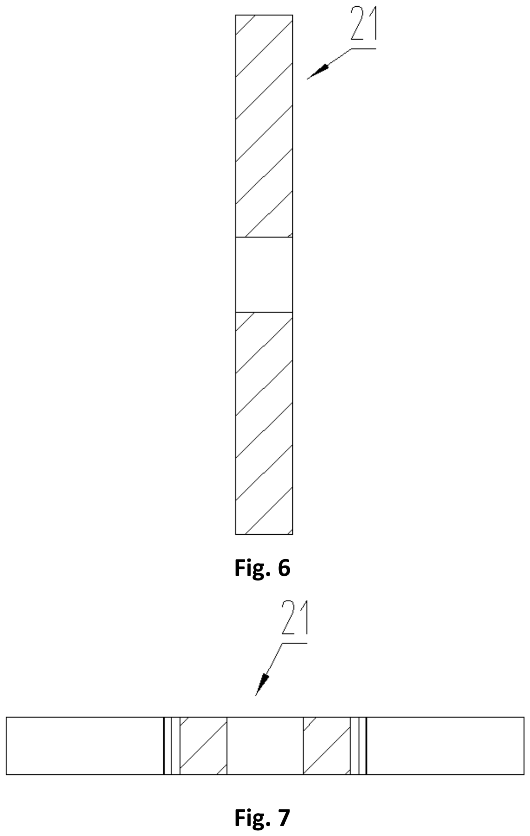

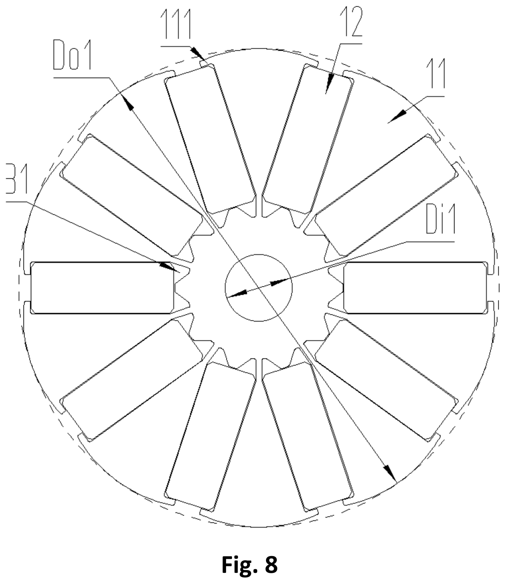

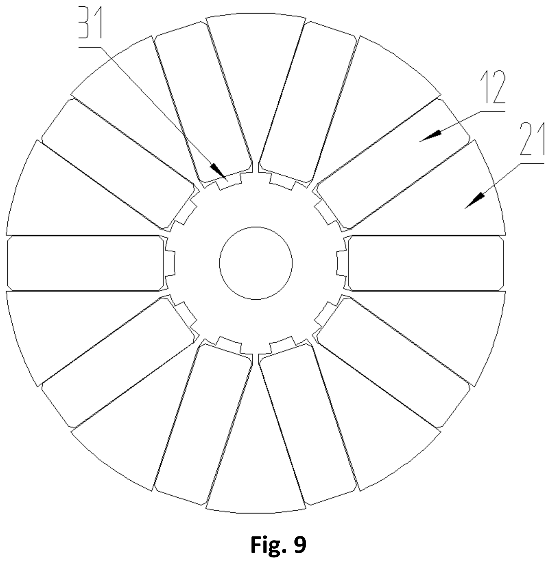

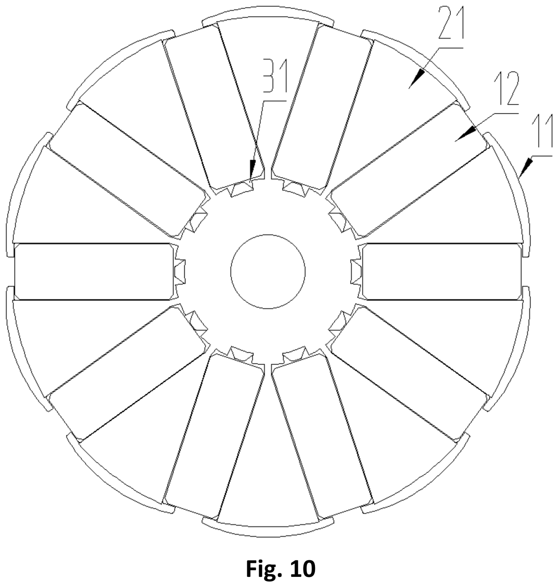

With reference to Figs. 1 to 10 in combination, according to embodiments of the present invention, a rotor structure includes a rotor core 11, first permanent magnets 12 and a second permanent magnet 21, wherein the rotor core 11 is provided with mounting grooves, and the first permanent magnets 12 are mounted in the mounting grooves; along an axial direction of the rotor core 11, an axial height of the first permanent magnets 12 is greater than an axial height of the rotor core 11; the second permanent magnet 21 is disposed at an axial end of the rotor core 11, the second permanent magnet 21 is of an integrated structure, through slots 22 are disposed on the second permanent magnet 21, and at least one end of the first permanent magnets 12 extends out of the rotor core 11 in an axial direction and is inserted into the through slots 22; the second permanent magnet 21 further comprises an annular portion 23 and magnetic pole portions 24, wherein the magnetic pole portions 24 are integrally formed by the connection of the annular portion 23.

The first permanent magnets 12 and the second permanent magnet 21 are both arranged in a rotor structure, and the first permanent magnets 12 and the second permanent magnet 21 together provide flux linkage to the motor, increasing a torque density of the motor; the relative position design of the first permanent magnets 12 and the second permanent magnet 21 can enable the first permanent magnets 12 to serve as a part of a magnetic circuit through which magnetic flux lines of the second permanent magnet 21 flow, and the magnetic flux lines of the first permanent magnets 12 and the second permanent magnet 21 are gathered on the rotor core 11 and then enter an air gap and a stator, thereby improving the flux-concentration effect of a motor, effectively improving the efficiency and torque density of the motor, and increasing the output force of the motor; the first permanent magnets 12 not only serve as a magnetic flux source, but also can draw magnetic flux lines of the second permanent magnet 21 to enter the rotor core 11, meanwhile, the second permanent magnet 21 not only serves as a magnetic flux source, but also can block leakage flux of the first permanent magnets 12, so that the comprehensive utilization rate of the permanent magnet is higher.

In an embodiment, the first permanent magnet 12 is magnetized in a tangential direction, and the second permanent magnet 21 is magnetized in an axial direction. In this embodiment, the first permanent magnet 12 with a greater axial height is set to be magnetized in the tangential direction, and the second permanent magnet 21 arranged at the axial end of the rotor core 11 is magnetized in the axial direction, so as to achieve continuous flux linkage of the first permanent magnet 12 and the second permanent magnet 21, so that the first permanent magnet 12 and the second permanent magnet 21 are able to more effectively provide flux linkage to the motor jointly to effectively increase the output of the motor.

In an embodiment, the second permanent magnet 21 is injection-molded magnetic steel. By using the injection-molded magnetic steel, on the one hand, the saturation of the rotor is able to be reduced, and the iron loss is able to be reduced; and on the other hand, the injection-molded magnetic steel has a higher degree of freedom in shape, so that the manufacturing difficulty of the second permanent magnet 21 and the rotor structure is able to be reduced.

In an embodiment, the second permanent magnet 21 is injection-molded ferrite or injection-molded NdFeB, and the second permanent magnet 21 may also be injection-molded magnetic steel of other material types.

In an embodiment, at least one end of an axial end portion of the rotor core 11 is provided with a second permanent magnet 21, so that a magnetic circuit at an end portion of the motor can be optimized, thereby increasing the torque density and the motor efficiency, and ensuring high performance of the motor.

In an embodiment, the second permanent magnet 21 is disposed at each of the two axial ends of the rotor core 11.

In an embodiment, the annular portion 23 is located at a radial inner side of the second permanent magnet 21, the through slots 22 are formed between each of adjacent magnetic pole portions 24, the magnetic pole portions 24 are radially arranged along a circumferential direction of the annular portion 23 and are connected to the annular portion 23 through connecting ribs, so as to form an integral structure with the annular portion 23. In order to ensure the strength of the rotor structure, magnetic bridges are provided on an inner side of the rotor core 11, and an annular portion 23 provided on the radial inner side of the second permanent magnet 21 facilitates the saturation of the magnetic bridges, reducing the flux leakage of the first permanent magnets 12 at the inner magnetic bridges. In the present embodiment, the second permanent magnet 21 is connected by the annular portion 23 to form an integral structure. That is, the second permanent magnet 21 is a whole rather than a block.

In an embodiment, the rotor structure includes through holes 31, and the through holes 31 are disposed on a radial inner side of the first permanent magnets 12 and passes through the rotor core 11 and the second permanent magnet 21. The through hole 31 is formed between the through slot 22 and the first permanent magnets 12 located in the through slots 22. The through holes 31 pass through the rotor core 11 and the second permanent magnet 21, and can be used as a positioning hole in the rotor manufacturing process; if the whole rotor is of an overmolded structure, the through holes 31 may also serve as flow channels for a molded material.

In an embodiment, a supporting protrusion protruding radially outward is provided on a side wall at the radial inner side of the mounting groove of the rotor core 11, and a top shape of the supporting protrusion matches a side wall at the radial inner side of the first permanent magnet 12 and forms a surface contact.

In this embodiment, through holes 31 are formed between two sides of the support protrusions and the side wall of the mounting grooves. The top shape of each of the support protrusion matches the surface of each of the first permanent magnet 12 facing the support protrusion, so that the surface contact is formed between the support protrusion and the first permanent magnet 12, thereby mounting and positioning the first permanent magnet 12 by using the support protrusion. In this embodiment, no support protrusion is disposed in the through slot 22, a U-shaped structure is formed on a radially inner side of the through slot 22, the first permanent magnet 12 is limited by a U-shaped structure, and the U-shaped structure forms a through hole 31.

In an embodiment, the first permanent magnets 12 and the second permanent magnet 21 are both magnetic flux sources, and no other magnetic conduction components are arranged in the rotor structure except for the rotor core 11.

In one embodiment, the axial height of the rotor core 11 is x, the axial height of the first permanent magnet 12 is y, y>x, and an axial height of the second permanent magnet 21 is z, where 0.2×(y-x) ≤z≤1.2×(y-x). By defining the relationship among the axial heights of the rotor core 11, the first permanent magnet 12 and the second permanent magnet 21, on the one hand, the high utilization rate of the material of the rotor core 11 and the permanent magnet can be guaranteed, and on the other hand, with the cooperation of dimensions within the range, the leakage flux at the end of the rotor structure can be reduced to a maximum extent.

In some embodiments, z≤0.5×(y-x) is a better size fit, and in this case, the magnetic flux lines of the second permanent magnet 21 may completely enter the rotor core 11 through the pulling of the first permanent magnet 12, and meanwhile, the second permanent magnet 21 also blocks the self-leakage flux path of the first permanent magnet 12, thereby improving the comprehensive utilization rate of the permanent magnet. In some embodiments, z = 0.5×(y-x).

In an embodiment, on the plane perpendicular to the axial direction of the rotor core 11, an inner diameter of the second permanent magnet 21 is Di2, and an inner diameter of the rotor core 11 is Di1, wherein Di2≥Di1. An inner hole of the rotor core 11 needs to be provided with a rotating shaft. On the one hand, the above size relationship is able to make way for the assembly of the rotating shaft; and on the other hand, without affecting the assembly of the rotating shaft, a plastic sealing material or other materials is able to be filled in an inner hole of the second permanent magnet 21 to enhance the strength of the rotor.

In an embodiment, an outer circumferential side of the rotor core 11 is provided with limiting protrusions 111, and the limiting protrusions 111 extend laterally from both sides of the rotor core 11 in a circumferential direction and form a radial limit on the first permanent magnets 12.

In this embodiment, the limiting protrusions 111 are located at an outermost circumference of the rotor core 11 and extend along a circumferential direction from two side surfaces in the circumferential direction of the rotor core 11, and two limiting protrusions 111 extending towards each other are arranged at an interval to form an open slot structure while radially limiting the first permanent magnets 12, thereby reducing the radial flux leakage of the first permanent magnets 12 at an outer periphery of the rotor core 11.

In an embodiment, an outer circumferential wall of the rotor core 11 includes a plurality of arc surfaces arranged at intervals, and a distance between the arc surfaces and the central axis of the rotor core 11 decreases progressively from a middle to both ends along the circumferential direction.

In this embodiment, since the rotor core 11 forms the open slot structure, the outer circumferential structure of the rotor core 11 is not a complete circle, but includes a plurality of arc segments arranged at intervals, wherein a middle of each arc segment protrudes outward along the radial direction to form an arc structure, a center of the arc structure is misaligned with a center of an outer circle of the rotor, which is able to improve the air gap flux density between a stator and a rotor, and is more conducive to forming a sine curve and improving the working performance of the motor.

In an embodiment, on the plane perpendicular to the axial direction of the rotor core 11, a maximum value of an outer diameter of the second permanent magnet 21 is Do2, and a maximum value of an outer diameter of the rotor core 11 is Do1, wherein Do2≤Do1.

In an embodiment, Do2=Do1.

For the motor, on the one hand, an outer side of the rotor structure is sleeved with a stator structure, and an air gap is formed between the rotor structure and the stator structure, so that this arrangement is able to make way for the assembly of the stator structure; and on the other hand, to ensure that the first permanent magnet 12 will not fall off after being assembled into the rotor core 11, an outer circle of the rotor core 11 is provided with positioning points, the positioning points have a small magnetic circuit area and are prone to saturation, the position of the positioning points is close to the air gap and is a magnetic flux gathering position with a large iron loss, and Do2≤Do1, which is able to allow the magnetic flux of the second permanent magnet 21 to avoid the position of the positioning points, thereby reducing the iron loss of the motor. In a motor with a low iron loss proportion, Do2=Do1 is a better choice.

In one embodiment, a position of a polar region of the magnetic pole portion 24 corresponds to a position of a polar region of the rotor core 11.

In one embodiment, a shape of the polar region of the magnetic pole portion 24 is adapted to a shape of a corresponding polar region of the rotor core 11, and one polar region of the magnetic pole portion 24 fills the corresponding polar region of the rotor core 11. The "filling" here means that on the plane perpendicular to the axial direction of the rotor core 11, there is no gap between the lug 214 and the rotor core 11.

In this embodiment, a magnetic flux is generated in the polar region of the magnetic pole portion 24, and a magnetic circuit of the magnetic flux is formed in a polar region of the rotor core 11 at a position corresponding to the polar region of the magnetic pole portion 24. Correspondingly arrangement of the magnetic pole portion 24 and the rotor core 11 can shorten the magnetic circuit as much as possible, and reduce the magnetic loss.

In an embodiment, the second permanent magnet 21 is alternately magnetized at NS poles along the axial direction of the rotor core 11.

In an embodiment, The polarity of one polar region of the second permanent magnet 21 on a side close to the rotor core 11 is a first polarity, and the polarities of two first permanent magnets 12 on two adjacent sides of the one polar region of the second permanent magnet 21 on the side close to the rotor core 11 are first polarities.

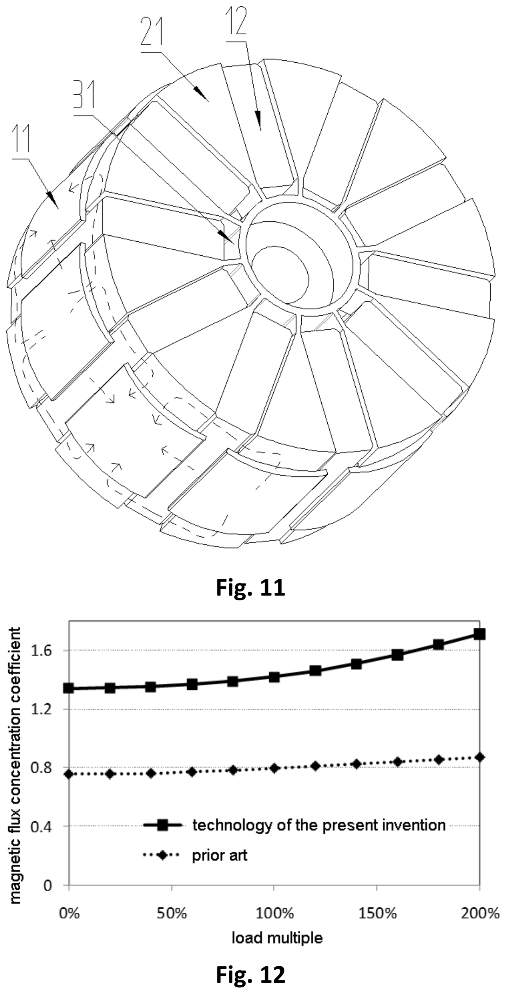

In the embodiment shown in Fig. 11, the second permanent magnet 21 is magnetized in the axial direction, and the first permanent magnet 12 is magnetized tangentially, the magnetic flux lines of the second permanent magnet 21 enter the rotor core 11 with the portion of the first permanent magnet 12 extending out of the rotor core 11 as a magnetic path, and, together with magnetic flux lines generated by a part of the first permanent magnet 12 inserted into the rotor core 11, is concentrated and the pass through the air gap and the stator through the rotor core 11, thus, the flux concentration effect of the motor can be greatly improved, and the torque density and efficiency of the motor can be improved.

In an embodiment, the first permanent magnet 12 is a sintered permanent magnet or an injection-molded permanent magnet, which is able to be determined according to the usage occasion, usage temperature, and the like of the motor.

In an embodiment, the rotor core 11 is formed by stacking silicon steel sheets, or the rotor core 11 is injection-molded magnetic steel; and on the plane perpendicular to the axial direction of the rotor core 11, along the radial direction, the rotor core 11 is alternately magnetized at NS poles.

The rotor core 11 is a path carrier for flux linkage circulation of the first permanent magnet 12 and the second permanent magnet 21, and plays a role in unblocking and guiding the flux linkage.

In an embodiment, the rotor core 11 is formed by stacking silicon steel sheets and thus has better magnetic permeability.

In an embodiment, the rotor core 11 is injection-molded magnetic steel, and after the rotor core 11 is magnetized, the rotor core 11 has a pulling effect on the flux linkage of the first permanent magnet 12 and the second permanent magnet 21, and is also able to guide the flux linkage to enter the air gap and the stator after magnetic flux concentration.

In an embodiment, the rotor structure is filled with plastic sealing materials at ends and internal gaps and sealed into a whole, so that the overall structural strength of the rotor assembly is able to be ensured.

With reference to Fig. 12, compared with motors in the related art, the motor employing the rotor structure according to the embodiment of the present invention has a flux concentration coefficient increased by more than 60%, and the flux concentration is significantly improved.

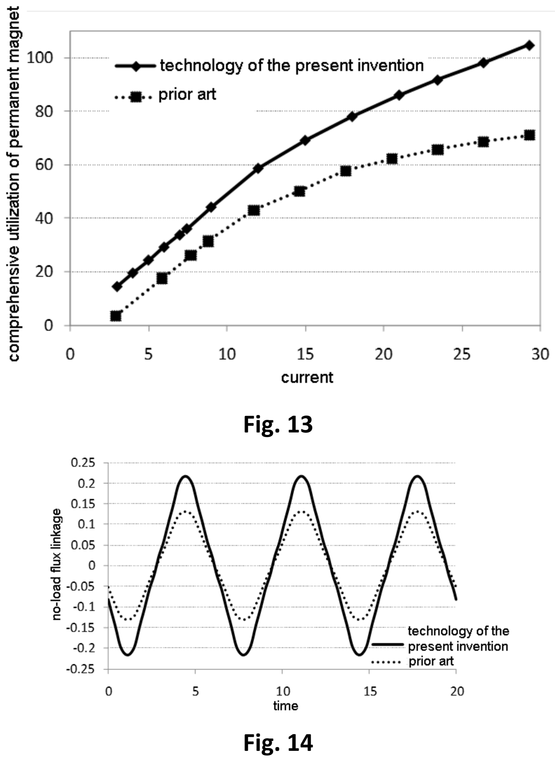

With reference to Fig. 13, compared with motors in the related art, the motor employing the rotor structure according to the embodiment of the present invention has a higher comprehensive utilization of the permanent magnet, and in particular, under a heavy load, the utilization of the permanent magnet is increased by more than 35%.

With reference to Fig. 14, compared with motors in the related art, the motor employing the rotor structure according to the embodiment of the present invention has a no-load flux linkage increased by more than 50%, effectively increasing the no-load flux linkage and improving the performance of the motor.

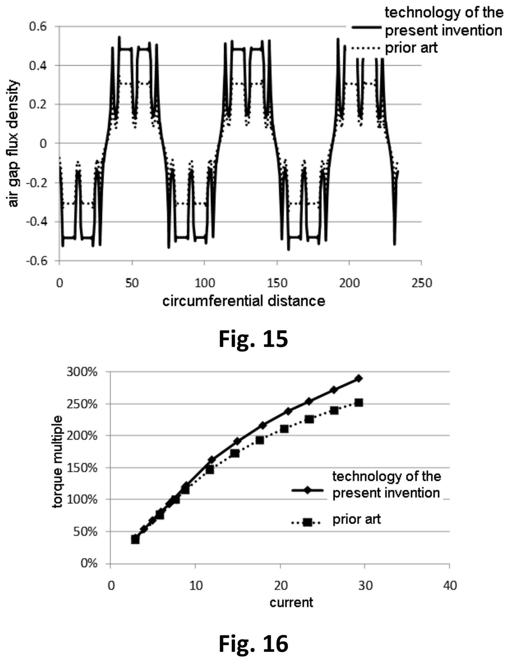

With reference to Fig. 15, compared with motors in the related art, the motor employing the rotor structure according to the embodiment of the present invention has and air gap flux density increased by more than 60%, effectively increasing the air gap flux density, improving the torque density of the motor, and increasing the output force of the motor.

With reference to Fig. 16, compared with motors in the related art, the motor employing the rotor structure according to the embodiment of the present invention shows that the torque multiple advantage becomes more evident as the current increases, achieving a higher torque multiple, improving the torque density of the motor, and increasing the output force of the motor.

According to an embodiment of this invention, a motor includes a stator structure and a rotor structure. The rotor structure is the above rotor structure.

It should be noted that the terms used here are merely used to describe specific implementations, but are not intended to limit exemplary implementations according to this invention. As used here, unless otherwise explicitly stated in the context, a singular form is also intended to comprise a plural form. In addition, it should be further understood that when the terms "contain" and/or "comprise" are used in this specification, the terms indicate that there is a feature, a step, an operation, a device, an assembly, and/or a combination thereof.

It should be noted that the terms "first", "second", and the like in the specification and claims of this invention and the above accompanying drawings are used to distinguish similar objects, but are not intended to describe a particular sequence or a precedence order. It should be understood that the data used in this way can be interchanged in appropriate circumstances, so that the implementations of this invention described here can be implemented in a sequence other than those illustrated or described here.

The above descriptions are merely some embodiments of this invention, but are not intended to limit this invention. For those skilled in the art, this invention may have various modifications and variations. Any modifications, equivalent substitutions, improvements, and the like made within the spirit and principle of this invention shall fall within the scope of protection of this invention.

## Claims

1. A rotor structure, comprising a rotor core (11), first permanent magnets (12), and a second permanent magnet (21), wherein the rotor core (11) is provided with mounting grooves, and the first permanent magnets (12) are mounted in the mounting grooves respectively; along an axial direction of the rotor core (11), an axial height of the first permanent magnets (12) is greater than an axial height of the rotor core (11); the second permanent magnet (21) is disposed at an axial end of the rotor core (11), the second permanent magnet (21) is of an integrated structure, through slots (22) are disposed on the second permanent magnet (21), and at least one end of each of the first permanent magnets (12) extends out of the rotor core (11) in an axial direction and is inserted into a corresponding through slot (22); the second permanent magnet (21) further comprises an annular portion (23) and magnetic pole portions (24), wherein the magnetic pole portions (24) are integrally formed by a connection of the annular portion (23).

2. The rotor structure according to claim 1, wherein the annular portion (23) is located on a radial inner side of the second permanent magnet (21), the through slots (22) are formed between each of two adjacent magnetic pole portions (24), the magnetic pole portions (24) are radially arranged along a circumferential direction of the annular portion (23) and are connected to the annular portion (23) through connecting ribs, so as to form an integral structure with the annular portion (23).

3. The rotor structure according to claim 1, wherein the rotor structure comprises through holes (31), the through holes (31) are disposed at a radial inner side of the first permanent magnets (12) and penetrate through the rotor core (11) and the second permanent magnet (21).

4. The rotor structure according to claim 1, wherein the first permanent magnet (12) is tangentially magnetized, and the second permanent magnet (21) is axially magnetized.

5. The rotor structure according to claim 1, wherein the second permanent magnet (21) is injection-molded magnetic steel.

6. The rotor structure according to claim 1, wherein at least one axial end of the rotor core (11) is provided with the second permanent magnet (21).

7. The rotor structure according to claim 1, wherein through holes (31) are formed between the through slots (22) and the first permanent magnets (12) located in the through slots (22).

8. The rotor structure according to claim 1, wherein the first permanent magnets (12) and the second permanent magnet (21) are both magnetic flux sources, and no other magnetic conduction components are arranged in the rotor structure except for the rotor core (11).

9. The rotor structure according to any one of claims 1 to 8, wherein the axial height of the rotor core (11) is x, the axial height of the first permanent magnets (12) is y, y > x, and an axial height of the second permanent magnet (21) is z, wherein 0.2×(y-x) ≤ z ≤ 1.2×(y-x).

10. The rotor structure as claimed in claim 9, wherein z ≤ 0.5×(y-x).

11. The rotor structure according to any one of claims 1 to 8, wherein on a plane perpendicular to the axial direction of the rotor core (11), an inner diameter of the second permanent magnet (21) is Di2, and an inner diameter of the rotor core (11) is Di1, wherein Di2≥Di1..

12. The rotor structure according to claim 11, wherein an outer circumferential side of the rotor core (11) is provided with limiting protrusions (111), and the limiting protrusions (111) extend laterally from both sides of the rotor core (11) in a circumferential direction and form a radial limit on the first permanent magnets (12).

13. The rotor structure according to any one of claims 1 to 8, wherein an outer peripheral wall of the rotor core (11) comprises a plurality of arc surfaces disposed at intervals, and along a circumferential direction, a distance between each of the arc surfaces and a central axis of the rotor core (11) gradually decreases from a middle of the each of the arc surfaces to two ends of the each of the arc surfaces.

14. The rotor structure according to any one of claims 1 to 8, wherein on a plane perpendicular to the axial direction of the rotor core (11), a maximum value of an outer diameter of the second permanent magnet (21) is Do2, and a maximum value of an outer diameter of the rotor core (11) is Do1, Do2 ≤ Do1.

15. The rotor structure according to claim 14, wherein Do2 = Do1.

16. The rotor structure according to any one of claims 1 to 8, wherein polar regions of the magnetic pole portions (24) are provided corresponding to polar regions of the rotor core (11) respectively.

17. The rotor structure according to claim 16, wherein a region shape of the polar region of each of the magnetic pole portions (24) is adapted to a region shape of a corresponding polar region of the rotor core (11), and the polar region of the each of the magnetic pole portions (24) is filled with the corresponding polar region of the rotor core (11).

18. The rotor structure according to claim 5, wherein the second permanent magnet (21) is injection-molded ferrite or injection-molded NdFeB.

19. The rotor structure according to claim 1, wherein the second permanent magnet (21) is alternately magnetized at NS poles along the axial direction of the rotor core (11).

20. The rotor structure according to claim 1 or 19, wherein a polarity of the second permanent magnet (21) on a side close to the rotor core (11) is a first polarity, and polarities of two first permanent magnets (12) on two adjacent sides of the second permanent magnet (21) on the side close to the rotor core (11) are first polarities.

21. The rotor structure according to claim 1, wherein the first permanent magnets (12) are a sintered permanent magnet or an injection-molded permanent magnet.

22. The rotor structure according to claim 1, wherein the rotor core (11) is formed by stacking silicon steel sheets, or the rotor core (11) is injection-molded magnetic steel; and on a plane perpendicular to the axial direction of the rotor core (11), along a radial direction, the rotor core (11) is alternately magnetized at NS poles.

23. The rotor structure according to claim 1, wherein the rotor structure is filled with plastic sealing materials at ends and internal gaps and molded and sealed into a whole.

24. A motor, comprising a stator structure and the rotor structure according to any one of claims 1 to 23.
